# EUROPEAN PATENT SPECIFICATION

(11) **EP 1 226 879 B1**
(45) Date of publication and mention of the grant of the patent: **18.01.2006**
(21) Application number: 00962968.4
(22) Date of filing: 29.09.2000
(51) Int. Cl.: B07C 5/02, B65G 47/22, B65G 47/14, B65G 47/84, B65G 21/20, G01N 21/95

(54) **Conveying apparatus and inspecting apparatus**
Fordervorrichtung und Prüfvorrichtung
Dispositif de transport et dispositif d'inspection

(30) Priority: 30.09.1999 JP 27859599
(43) Date of publication of application: 31.07.2002
(73) Proprietor: Daiichi Jitsugyo Viswill Co., Ltd., Suita-shi Osaka 564-0042 (JP)
(72) Inventor: KAKIUCHI, Shogo, Kanebo.Ltd, Tokyo 108-8080 (JP); TSUTSUMI, Koji, Minato-ku Tokyo 108-8080 (JP)
(74) Representative: Müller-Boré & Partner Patentanwälte
(86) International application number: PCT/JP2000/006756
(87) International publication number: WO 2001/023110

(56) References cited:
- EP-A- 0 166 277
- EP-A- 0 715 164
- FR-A- 2 539 057
- JP-A- 10 170 446
- JP-A- 63 106 225
- JP-B2- 6 088 656
- JP-U- 60 072 418
- US-A- 3 722 658
- US-A- 4 757 382
- US-A- 4 934 560
- US-A- 5 531 312
- US-A- 5 878 868
- PATENT ABSTRACTS OF JAPAN vol. 1998, no. 11, 30 September 1998 (1998-09-30) & JP 10 170446 A (NIPPON ERANKO KK;EISAI CO LTD), 26 June 1998 (1998-06-26)

## Description

The present invention relates to a conveying apparatus for a conveyed article and an inspecting apparatus for inspecting mainly a small article such as a drug medicine (a tablet, a capsule and the like), small confectionery such as a candy and the like, a washer, a button electric cell, or the like as the conveyed article in a defect inspection step, a visual inspection step, a dimensional check step or the like of the conveyed article while conveying the conveyed article, and an aligning and supplying apparatus thereof.

In the case of detecting respective surfaces of the conveyed article such as the small article or the like while conveying, a plurality of linear apparatuses have been conventionally arranged in series connection so as to be capable of transferring, however, there has been a disadvantage that a wide space to be occupied is required. On the contrary, when placing the conveying apparatuses in a vertical attitude, the occupied space is reduced, however, a required height thereof is significantly increased, and since the conveyed article held by suction is sometimes inclined due to a vibration of the conveying process or an its own weight, it is hard to inspect.

Further, the conveying apparatus for conveying the conveyed article in a linear direction is structured, for example, such that the conveyed article is mounted so as to ride over a pair of parallel belts and is conveyed while being held by suction by a suction means through a gap between the belts, so that since the belts can not be elongated and narrowed in order to resist a tensile strength, in the case that the conveyed article mounted on the belts is a small article, side surfaces thereof are supported between the belts deeply and the side surface of the conveyed article can not be sufficiently inspected.

Further, since a conventional rotary disc is structured such that a contact portion with the conveyed article is made, for example, of an aluminum metal or the like, the contact portion is easily slipped due to a low coefficient of friction, whereby a conveying state is easily changed due to a weight of the conveyed article.

Further, the structure of this kind of rotary disc apparatus (for example, Japanese Patent Application Laid-Open No. 61-212374) is provided with movable opposing plates constituted by a pair of mutually opposing rotary discs and having a slit which is provided in peripheral portions of the rotary discs and continuously all around the periphery thereof and has an opposing gap smaller than the small article, and a suction means having a rotary tube shaft concentrically pierced in an inner side of the movable opposing plates, communicating with an inner portion of the rotary tube shaft and sucking an air from the slit to an inner side of the movable opposing plates. However, since the rotary tube shaft is provided, the air is unnecessarily sucked from the slit corresponding to a portion requiring no suction.

Further, in the case of supplying the conveyed article to the conveying apparatus, the aligning and supplying apparatus is used. The conventional aligning and supplying apparatus is structured such that the conveyed article supplied on a turn table is exposed to an aligning operation of an aligning guide together with a rotation of the turn table, and is gradually aligned along a peripheral wall. The conveyed article reaching a thickness gate from the aligning guide is sorted on the border of a predetermined thickness, and the conveyed article having a thickness equal to or less than the thickness passes through the thickness gate so as to reach a width guide. The conveyed article reaching the width guide is sorted on the border of a predetermined width, and the conveyed article having a width equal to or less than the width passes through the width guide so as to be fed out to the conveying apparatus.

However, the article having the different width and thickness and being stable in a state of turning at 90 degrees, such as the tablet or the like is sorted at the thickness gate. The more a rate of the 90 degrees turn becomes, the more a number or an amount thereof sorted by the thickness gate becomes, whereby the number of the conveyed article fed out to the conveying apparatus is reduced. Accordingly, a processing efficiency is significantly deteriorated.

US-A-4 757 382 discloses a transport device comprising a pair of parallel discs, arranged opposed to each other and spaced apart from each other thereby forming a slit, through which a small object can be sucked to the slit and held on the outer circumference of the two opposing discs. Further, this document shows a linear conveying portion, which can transport items in a horizontal direction.

JP-A-10 170 446 discloses a visual inspecting apparatus wherein tablets are transported via pockets of a rotary drum to a horizontal transfer part and wherein, during transportation, the tablets are inspected.

It is an object of the present invention to provide a conveying apparatus and an inspecting apparatus, which can stably convey small articles with a large variety in shape and material and simultaneously provide a good accessibility to the small articles.

This object is fulfilled by the conveying apparatus having the features disclosed in claim 1 and the inspecting apparatus having the features disclosed in claim 6. Preferred embodiments are subject to the dependent subclaims.

It is an advantage of the present invention to carry out a side surface inspection of conveyed articles without requiring much space.

Further it is an advantage of the present invention to stably execute an inspection in a rotary disc apparatus.

Furthermore, advantageously air can be shut out in a portion of the conveying apparatus or the inspecting apparatus requiring no suction.

In accordance with the present invention, there is provided a conveying apparatus comprising:
a rotary disc portion having a slit on its outer peripheral surface and provided with a suction means for securing an article at the opposite sides of the slit by suction through the slit while the article is being conveyed; and
a linear conveying portion having a pair of parallel conveying belts with a gap formed therebetween and provided with a suction means for securing the article on the pair of conveying belts by suction through the gap , one end of the linear conveying portion being opposed to the outer peripheral surface of the rotary disc portion so that the article is transferable from the rotary disk portion to the linear conveying portion, wherein ring-shaped supporting members having a high friction coefficient are provided at the opposite sides of the slit along the outer peripheral surface of the rotary disc portion.

In accordance with the conveying apparatus described in the present invention, since the apparatus is constituted by the rotary disc portion and the linear conveying portion, it is possible to stably convey the article without requiring a lot of space even when the linear conveying portion is arranged horizontally, and further it is possible to execute a side surface inspection of the conveyed article conveyed in the rotary disc.

In accordance with a preferred embodiment of the conveying apparatus of the present invention, it is possible to fix the supporting members to the peripheral edge of the rotary disc portion unlike the conveying belts of the linear conveying portion and to make a cross sectional area of the supporting members smaller. Thus, such supporting members enable a stable inspection of the article without hindering a side surface inspection of the article and without slipping the article. In particular, if the supporting member is constituted by a structure having a shock-absorbing property and an adhesive property such as an O-ring, the article can be stably conveyed at a high speed.

In accordance with a preferred embodiment of the present invention, there is provided a conveying apparatus, wherein the linear conveying portion includes a first conveying portion and a second conveying portion having an identical construction, and one end of the first conveying portion is opposed to the outer peripheral surface of the rotary disc portion so that the article is transferable, whereas one end of the second conveying portion is opposed to the other end of the first conveying portion so that the article is transferable.

In accordance with a further preferred embodiment of the conveying apparatus, in addition, it is possible to inspect both front and rearsurfaces of the conveyed article at the linear conveying portion.

In accordance with a further preferred embodiment of the present invention, there is provided a conveying apparatus, further comprising an aligning and supplying apparatus provided at a side of the rotary disk portion opposite from the first conveying portion for aligning the article and supplying the article to the outer peripheral surface of the rotary disc portion, and an air shutting means for closing the slit in a circumferential surface portion of the rotary disk portion except a section extending from the aligning and supplying apparatus to the first conveying portion with respect to a rotational direction of the rotary disc portion.

In accordance with a further preferred embodiment of the conveying apparatus, in addition, it is possible to shut the air at a section of the slit requiring no suction in the rotary disc. Accordingly, it is possible to save a suction air amount, spare a blower capacity and save an energy.

In accordance with the present invention, there is provided an inspecting apparatus using a preferred embodiment of the conveying apparatus, comprising:
a side surface inspecting portion for inspecting a side surface of the article on the rotary disc portion;
a front surface inspecting portion for inspecting a front surface of the article on the first conveying portion;
a rear surface inspecting portion for inspecting a rear surface of the article on the second conveying portion; and
a sorting portion for sorting the article according to inspection results.

In accordance with a preferred embodiment of the inspecting apparatus, in addition, it is possible to inspect respective surfaces including the side surface and both front and rear surfaces of the article, and it is possible to sort the article according to the inspection results in the sorting portion.

There is provided an aligning and supplying apparatus on which an article having a thickness and a width different from each other can be stably placed while a thickness or width direction thereof is aligned along a longitudinal direction, comprising:
a turn table having a stepped portion of a specified height along a peripheral edge of a placing surface;
a width guide fixed such that the width guide crosses the stepped portion, and one end thereof is located at a center side of the turn table while the other end thereof projects outwardly from the outer peripheral side of the stepped portion, whereby the article placed on the placing surface is guided from the central side of the turn table toward an outer peripheral side thereof by the rotation of the turn table; and
a thickness gate provided above the article passing through the width guide on the turn table, and having a projecting portion projecting toward the article so as to lean the article in a standing position down onto the stepped portion without leaning the article in a lying position when the article moving along the width guide moves onto the stepped portion by the rotation of the turn table.

In accordance with the described aligning and supplying apparatus, it is possible to align all the small articles, each of which has a width and a thickness different from each other and can be stabilized in a turned state, in their lying positions, and it is not necessary to sort the articles. Therefore, a processing efficiency can be improved.
Fig. 1 is a schematic view of an embodiment in accordance with the present invention;
Fig. 2 is a cross sectional view of a rotary disc portion;
Fig. 3 is a front elevational view of a state that one of rotary discs is taken out;
Fig. 4 is a cross sectional view of the state shown in Fig. 3;
Fig. 5 is a side elevational view of the rotary disc portion;
Fig. 6 is a front elevational view of the rotary disc portion;
Fig. 7 is a partly plan view of an aligning and supplying apparatus;
Fig. 8 is a cross sectional view of a turn table of the aligning and supplying apparatus shown in Fig. 7;
Fig. 9A is a cross sectional view along a line A-A in Fig. 7 in the case that a conveyed article has a high attitude;
Fig. 9B is a cross sectional view along a line B-B in Fig. 7;
Fig. 9C is a cross sectional view along a line C-C in Fig. 7;
Fig. 10A is a cross sectional view along a line A-A in Fig. 7 in the case that a conveyed article has a low attitude;
Fig. 10B is a cross sectional view along a line B-B in Fig. 7; and
Fig. 10C is a cross sectional view along a line C-C in Fig. 7.

A description will be given below of reference numerals described in the drawings.
Reference numeral 1 denotes an inspecting and conveying apparatus. Reference numeral 2 denotes an inspecting portion. Reference numeral 3 denotes a sorting portion. Reference numeral 4 denotes an aligning and supplying apparatus. Reference numeral 5 denotes a rotary disc portion. Reference numeral 6 denotes a first conveying portion. Reference numeral 7 denotes a second conveying portion. Reference numeral 8 denotes a linear conveying portion. Reference numeral 10 denotes a turn table, and reference numeral 10a denotes a mounting surface. Reference numeral 11 denotes a conveyed article. Reference numeral 12 denotes a side surface inspecting portion. Reference numeral 13 denotes a front surface inspecting portion. Reference numeral 14 denotes a back surface inspecting portion. Reference numeral 15 denotes a width guide. Reference numeral 17 denotes a slit. Reference numeral 18 denotes a motor. Reference numeral 19 denotes a drive shaft. Reference numerals 20 and 21 denote a rotary disc. Reference numeral 22 denotes a suction duct. Reference numeral 23 denotes a supporting member. Reference numeral 32 denotes an air shutting means. Reference numeral 52 denotes a conveying belt. Reference numeral 55 denotes a thickness gate. Reference numeral 56 denotes a step portion. Reference numeral 57 denotes a projection portion.

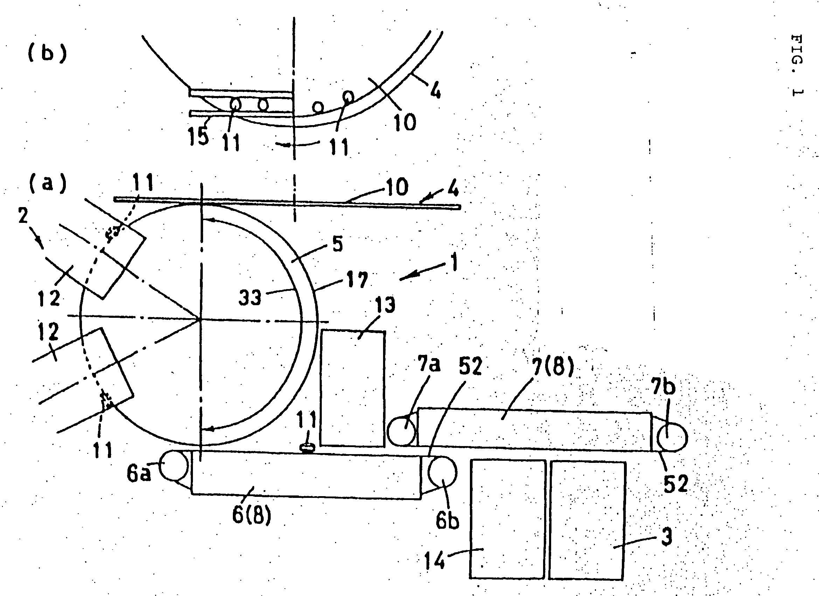

A description will be given of an embodiment in accordance with the present invention with reference to Figs. 1 to 10. Fig. 1 shows an inspecting apparatus, which has a conveying apparatus 1, an inspecting portion 2 and a sorting portion 3.

A conveying apparatus 1 has an aligning and supplying apparatus 4, a rotary disc portion 5, a first conveying portion 6 and a second conveying portion 7. The first conveying portion 6 and the second conveying portion 7 constitute a linear conveying portion 8. The aligning and supplying apparatus 4 is structured such that a conveyed article 11, for example, a small article, in this case, particularly a tablet is mounted on a turn table 10, and the conveyed article 11 is aligned along a peripheral edge portion in correspondence to a rotation of the turn table 10 by an aligning guide (not shown) arranged over the turn table 10 with a slight gap and is linearly fed by a width guide 15 (mentioned below) arranged near the peripheral edge portion of the turn table 10 with a slight gap so as to be supplied to the rotary disc portion 5.

The inspecting portion 2 has two side surface inspecting portions 12 for individually inspecting both side surfaces of the conveyed article 11 on the rotary disc portion 5 one side by one side, a front surface inspecting portion 13 for inspecting a front surface of the conveyed article 11 on the first conveying portion 6, and a back surface inspecting portion 14 for inspecting a back surface of the conveyed article 11 appearing upside on the second conveying portion 7. For example, a known structure provided with a light source illuminating the conveyed article 11 and a television camera picking up an image of the conveyed article 11 is applied to each of the structures in the inspecting portion 2 (for example, Japanese Patent Application Publication No. 6-088656).

The sorting portion 3 sorts the conveyed article 11 in response to an inspected result. The data obtained in the inspecting portion 2 is fed to a control means, for example, an analyzer or the like so as to be compared with a reference data, an analysis for obtaining an acceptable article data or a defective article data is executed, the data is transmitted to the sorting portion 3, a timing that the sorted portion 11 comes to the sorting portion 3 is taken by counting the conveyed article 11 passing through the inspecting portion 2, and the conveyed article 11 is divided into an acceptable article collecting duct and a defective article collecting duct due to a blowing such as an air pressure in the sorting portion 3 in response to the inspected result, whereby the sorting operation is executed. The known structure is employed for the structure of the sorting portion 3.

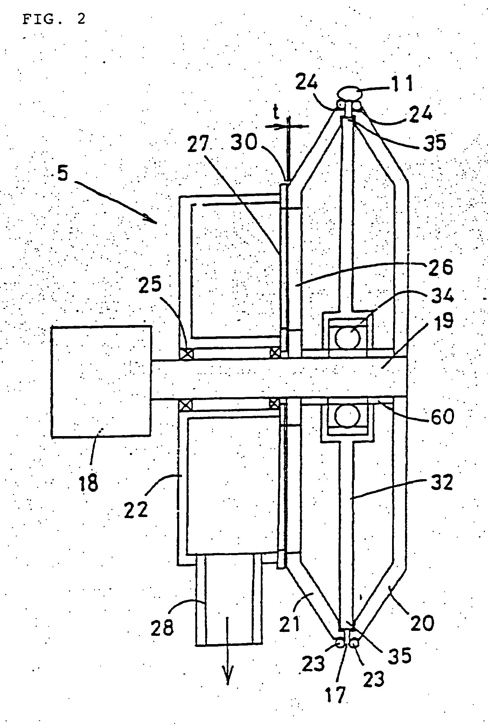

Fig. 2 shows a cross section of the rotary disc portion 5 with the suction means. A slit 17 is formed on an outer peripheral surface of the rotary disc portion 5, and the conveyed article 11 is conveyed in a state of being held by suction to both sides of the slit 17 by sucking through the slit 17. In the embodiment, the structure has a motor 18, a pair of rotating discs 20 and 21 mounted to a drive shaft 19 of the motor 18, opposing to each other so that peripheral edges are close to each other and forming the slit 17 therebetween, for example, using platelike discs, and a fixed suction duct 22 rotatably mounting the drive shaft 19 of the motor 18. A pair of rotary discs 20 and 21 are mounted to a tubular connecting member 60 fitted to the drive shaft 19 so as to determine an interval of the slit 17. A ring-like supporting member 23 having a high friction coefficient is provided in both sides of the slit 17 along the outer peripheral surfaces of the rotary discs 20 and 21. In the embodiment, a peripheral groove 24 is formed in each of the outer peripheral edges of the rotary discs 20 and 21, the supporting member 23 having a large friction coefficient, for example, an O-ring made of a article having an adhesive property and a buffering property, for example, a rubber or the like is attached thereto, and an interval of the slit 17 between the O-rings is set to be smaller than a size of the conveyed article 11, for example, about 1 mm. The suction duct 22 is mounted to the drive shaft 19 of the motor 18 via a bearing 25, moves the suction duct 22 close to one rotary disc 21 so as to form a gap 30 at an interval t, for example, about 0.5 mm, forms sucking holes 26 and 27 respectively communicating with opposing portions thereof, is provided with a sucking connection portion 28 on a side surface of the suction duct 22, and connects a known suction means (not shown) to the sucking connection portion 28. Accordingly, when taking out an air within the suction duct 22 by operating the suction means, a space between a pair of rotary discs 20 and 21 becomes negative pressure through the sucking holes 26 and 27, whereby the air is sucked from the slit 17 between the rotary discs 20 and 21. At this time, the gap 30 between the suction duct 22 and the rotary disc 21 achieves a seal effect due to a pressure loss of a fine interval. When mounting the conveyed article 11 such as the tablet or the like on the supporting member 23, the conveyed article 11 is held by suction to the supporting member 23 due to an air pressure, and when the rotary discs 20 and 21 rotate in correspondence to the rotation of the motor 18, the conveyed article 11 moves around a circumference of the rotary discs 20 and 21 in connection with the rotation of the rotary discs 20 and 21. Accordingly, the conveyed article 11 dropped down to the rotary disc portion 5 from the aligning and supplying means 4 as shown in Fig. 1 passes through the side surface inspecting portion 12 so as to be applied to the side surface inspection while being held by suction by the slit 17, and is conveyed toward the first conveying portion 6.

Reference numeral 32 denotes an air shutting means. The air shutting means 32 closes the slit 17 of the peripheral surface portion 33 other than a peripheral surface portion reaching the first conveying portion 6 from the aligning and supplying apparatus 4 in the rotational direction of the rotary disc portion 5. In the embodiment, a center portion thereof is supported to the drive shaft 19 of the motor 18 via the bearing 34 and a peripheral edge portion 35 is positioned so as to close the slit 17 of the peripheral surface portion 33.

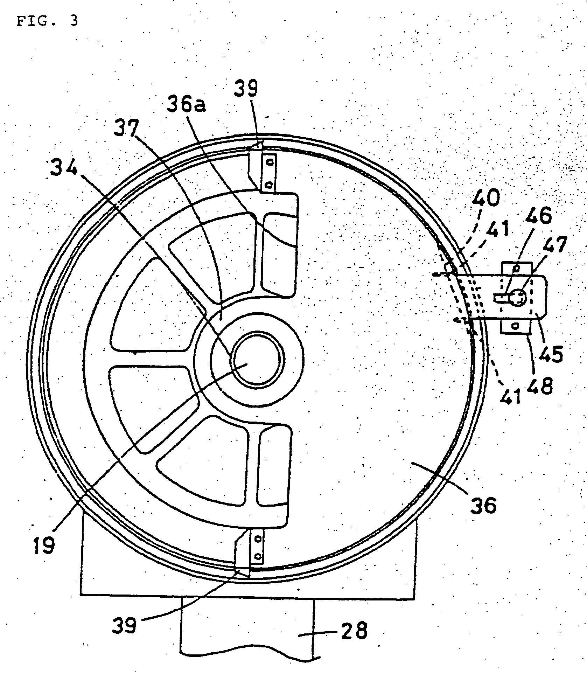

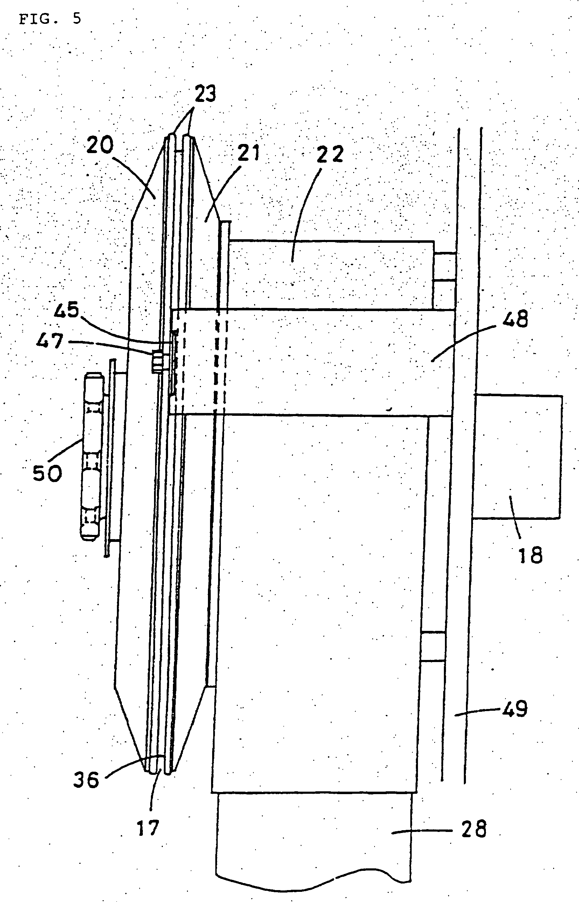

Fig. 3 shows an air shutting means 32. The air shutting means 32 is constituted by a substantially meniscus-shaped disc 36, a semicircular protruding portion 37 is provided in a center portion of a flat portion 36, the bearing 34 is provided in the protruding portion 37, and the bearing 34 is fitted to the drive shaft 19 of the motor 18, whereby the disc 36 is supported to the drive shaft 19. A wind guide 39 for obliquely guiding a wind at a position of the slit 17 is provided at both ends of the flat portion 36a of the disc 36. Further, a fixed plate receiving groove 40 is formed in a part of a circumferential portion of the disc 36, a pair of fixed pins 41 are provided within the fixed plate receiving groove 40 in a standing manner, a front end of a fixed plate 45 having a thickness of about 0.5 mm is inserted and attached within the fixed plate receiving groove 40 between the fixed pins 41 through the slit 17, a long hole 46 longer in an inserting direction is formed at a rear end of the fixed plate 45, a fixing means inserted to the long hole 46, for example, a thumb screw 47 is fastened to one end of a fixed member 48, and the fixed plate 45 is fixed to a vertical base 49 (Fig. 5) via the fixed member 48 so as to be capable of adjusting. Accordingly, the air sucked by the suction means and moving forward from the slit 17 is limited to a portion of the rotary discs 20 and 21 where the disc 36 does not exist. In this case, one of the wind guide 39 faces to the aligning and supplying means 4.

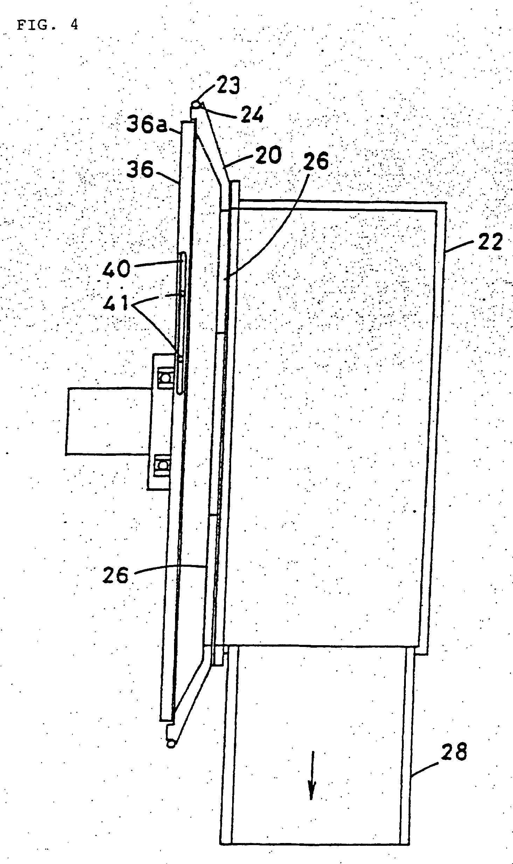

Fig. 4 shows the groove 40 and the pin 41 to which the fixed plate 45 of the disc 36 is inserted.

Fig. 5 shows a state that another end of the fixed member 48 is mounted to the vertical base 49 to which the motor 18 is mounted, and the fixed plate 45 is fixed to one end of the fixed member 48 by the thumb screw 47. Reference numeral 50 denotes a fixing device for fixing the rotary disc 20 to the tubular connection member 60 (Fig. 2).

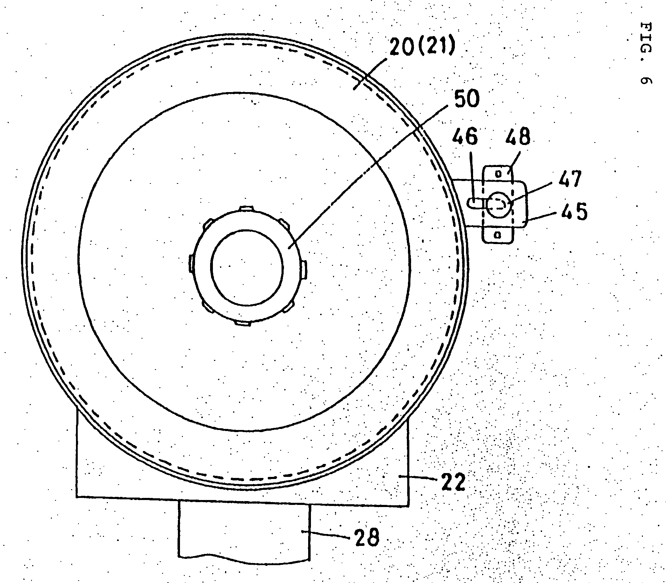

Fig. 6 is a front elevational view of the rotary discs 20 and 21.

The linear conveying portion 8 with the suction means sucks the conveyed article 11 riding over a pair of parallel conveying belts 52 through the gap between the conveying belts 52 as shown in Fig. 1, thereby holding the conveyed article 11 by suction to the conveying belt 52 so as to convey, in which one end opposes the outer peripheral surface of the rotary disc portion 5 so as to be capable of transferring the conveyed article 11. This linear conveying portion 8 is, as shown in Fig. 1, constituted by the first conveying portion 6 and the second conveying portion 7 having the same structure, one end of the first conveying portion 6 opposes to another of the wind guide 39 on the outer peripheral surface of the rotary disc portion 5 so as to be capable of transferring the conveyed article 11, and one end of the second conveying portion 7 opposes to another end of the first conveying portion 6 so as to be capable of transferring the conveyed article 11. Reference numerals 6a, 6b, 7a and 7b denote a ring body winding the conveying belt 52 therearound, for example, a pulley or the like. The ring bodies 6a, 6b, 7a and 7b connect one of the first conveying portion 6 and the second conveying portion 7 to a rotation driving means. The known structure is applied to the linear conveying portion 8 (for example, Japanese Patent Application Publication No. 5-065405).

Further, as shown in Fig. 1, the aligning and supplying apparatus 4 for aligning the conveyed article 11 so as to supply to the outer peripheral surface of the rotary disc portion 5 is positioned in an opposite side of the rotary disc portion 5 to the first conveying portion 6.

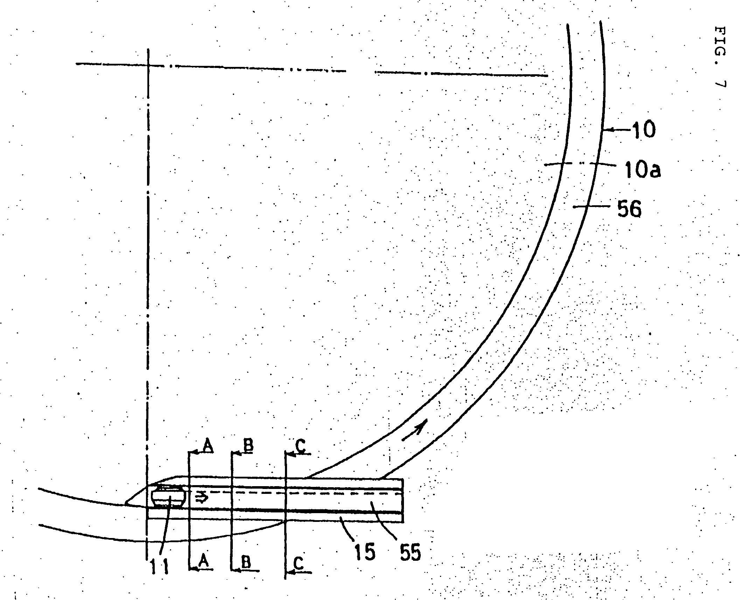

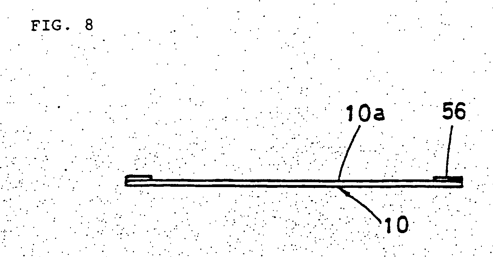

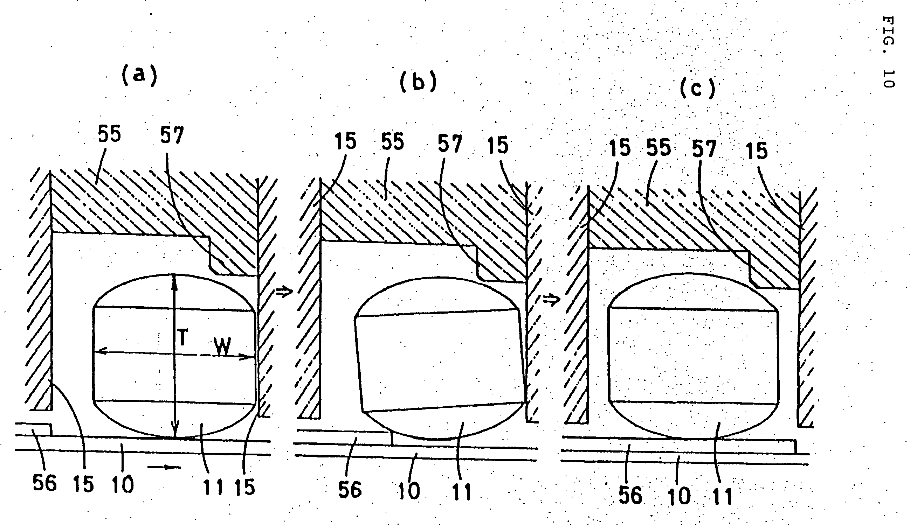

Figs. 7 and 8 are views showing details of the aligning and supplying apparatus 4 (in this case, a rotational direction of the turn table 10 is set to be opposite to Fig. 1). The aligning and supplying apparatus 4 is structured, for example, such as to mount the conveyed article 11 having different thickness T and width W (refer to Fig. 10) and capable of being stably mounted in a state of setting a thickness direction or a width direction to a vertical direction. For example, this is a tablet in which a width is about 6 mm, a thickness is about 5 mm and a length is longer than these. The aligning and supplying apparatus 4 has a turn table 10, a width guide 15, a thickness gate 55, an aligning guide (not shown) and a peripheral wall (not shown). The turn table 10 is structured such that a sheet having a thickness of about 0.5 mm is adhered to a mounting surface 10a, and a step portion 56 having a predetermined height is provided along a peripheral edge of the mounting surface 10a. The step portion 56 is structured, as shown in Fig. 8, such that a sheet, for example, having a thickness of about 0.5 mm is adhered to an outer periphery.

The aligning guide employs a known means, and is structured such as to align the conveyed article 11 mounted on the mounting surface 10a so as to be along the peripheral edge portion of the turn table 10.

The peripheral wall (not shown) is arranged in the peripheral edge portion of the turn table 10 with a slight gap, and is structured such as to prevent the conveyed article 11 on the turn table 10 from moving out of the turn table 10 from the portion other than the width guide 15.

The width guide 15 crosses to the step portion 56 so as to guide the conveyed article 11 mounted on the mounting surface 10a to the outer peripheral side from the center side due to the rotation of the turn table 10, for example, linearly, one end is positioned close to a center side of the turn table rather than the step portion 56, and another end protrudes outward from the outer periphery of the step portion 56 so as to be fixed (the fixing means is not shown). A width of the width guide 15 in accordance with the embodiment is set to a size capable of guiding the conveyed article 11 whichever of the width direction and the thickness direction is set to the vertical direction, and the conveyed article 11 aligned by the aligning guide is introduced within the width guide 15.

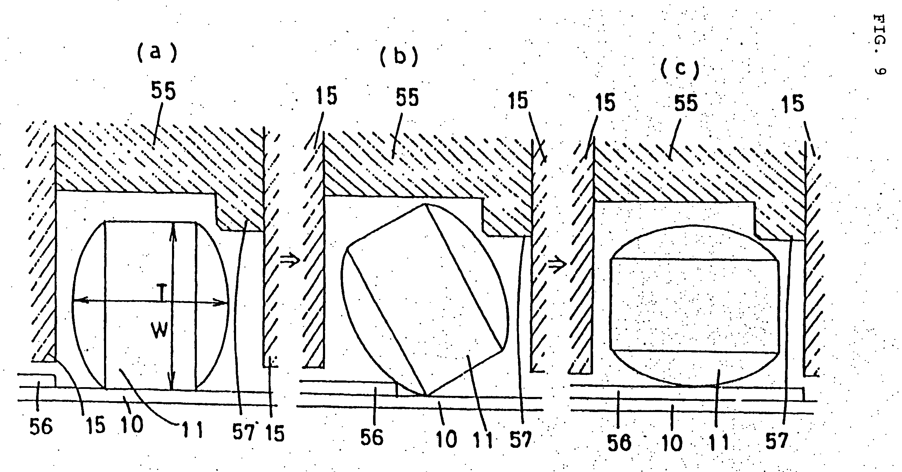

Figs. 9 and 10 describe an operation within the width guide 15 and the thickness gate 55. Figs. 9A and 10A show a cross section along a line A-A in Fig. 7, Figs. 9B and 10B show a cross section along a line B-B in Fig. 7, and Figs. 9C and 10C show a cross section along a line C-C in Fig. 7. The thickness gate 55 is arranged in an upper side of the conveyed article 11 passing within the width guide 15 on the turn table 10, and has a projection portion 57 protruding toward the conveyed article 11 so as to be capable of getting down the conveyed article 11 in a high attitude on a step portion 56 without getting down the conveyed article 11 in a low attitude at a time when the conveyed article 11 moving along the width guide 15 due to the rotation of the turn table 10 rides over the step portion 56. In the embodiment, the thickness gate 55 is set to a height at which the conveyed article 11 can enter within the width guide 15 even in the high attitude, and the projection portion 57 is provided in one side of the width guide 15, that is, an opposite side to a side from which the step portion 56 progressively enters, so as to protrude such a degree as to contact with a side surface at an upper end of the conveyed article 11 in the high attitude, thereby getting down the conveyed article 11.

Figs. 9A, 9B and 9C show a state in which the conveyed article 11 in the high attitude, that is, the tablet is mounted on the turn table 10 by setting the width direction to the vertical direction, and Fig. 9A shows a state in which the conveyed article 11 is introduced within the thickness gate 55 and the width guide 15. Fig. 9B shows a state in which the step portion 56 moves forward to about half in the width direction so as to press the side portion in the mounting side of the conveyed article 11 while the conveyed article 11 moves along one side wall of the width guide 15 due to the rotation of the turn table 10, whereby the upper end side surface of the conveyed article 11 is brought into contact with the projection portion 57 so as to be tilted in a get-down attitude. Fig. 9C shows a state in which the step portion 56 completely enters within the width guide 15. At this time, the conveyed article 11 rides over the step portion 56, and the conveyed article 11 simultaneously gets down on the step portion 56 so as to become in the low attitude in which the thickness direction is set to the vertical direction. Thereafter, as shown in Fig. 7, the conveyed article 11 further moves along the width guide 15, drops down from the peripheral edge portion of the turn table 10 and drops down on the slit 17 of the rotary disc portion 5 so as to be held by suction.

Figs. 10A, 10B and 10C show a state in which the conveyed article 11 in the low attitude, that is, the conveyed article 11 is mounted on the turn table 10 by setting the thickness direction to the vertical direction, and Fig. 10A shows a state in which the conveyed article 11 is introduced within the thickness gate 55 and the width guide 15. Fig. 10B shows a state in which the step portion 56 moves forward to about half in the width direction so as to press the side portion in the mounting side of the conveyed article 11 while the conveyed article 11 moves along one side wall of the width guide 15 due to the rotation of the turn table 10, whereby the conveyed article 11 is going to ride over the step portion 56. At this time, since the projection portion 57 has a size not being brought into contact with the side surface of the upper end portion of the conveyed article 11 as mentioned above, the projection portion 57 is not tilted while being brought into contact with one side wall of the width guide 15, and even when it is going to be tilted, the upper end surface of the conveyed article 11 is brought into contact with the lower surface of the projection portion 57 so as to prevent the projection portion 57 from being tilted. Fig. 10C shows a state in which the step portion 56 completely enters within the width guide 15. At this time, the conveyed article 11 rides over the step portion 56. The later operations are the same as those described in Fig. 9, and in any case, the conveyed article 11 drops down to the peripheral edge portion of the rotary disc portion so as to be held by suction by setting the thickness T direction to the vertical direction.

In accordance with this embodiment, since the apparatus is constituted by the rotary disc portion 5 and the linear conveying portion 8, it is possible to stably convey with saving a space even when arranging the linear conveying portion 8 horizontally, and it is possible to execute the side surface inspection of the conveyed article 11 conveyed on the rotary disc 5.

As is different from the conveying belt 52 of the linear conveying portion 8, since it is possible to fix the supporting member 23 to the peripheral edge of the rotary disc portion 5 and it is possible to reduce the cross sectional area of the supporting member 23, it is possible to stably inspect the conveyed article 11 without working against the side surface inspection of the conveyed article 11 and without slipping the conveyed article 11. In particular, when the supporting member 23 is constituted by a structure having a buffering property and an adhesive property, for example, an O-ring, it is possible to convey at a high speed and stably.

It is possible to inspect both of the front and back surfaces of the conveyed article 11 by the linear conveying portion 8.

It is possible to shut the air in the portion of the slit 17 requiring no suction in the rotary disc 5. Accordingly, it is possible to save a suction air amount, a blower capacity can have a margin and an energy can be saved.

It is possible to inspect each of the side surfaces and both of the front and back surfaces of the conveyed article 11, and it is possible to sort in correspondence to the inspected result by the sorting portion 3.

It is possible to align all the small articles having the different width W and thickness T and stabilizing under the turned state in the low attitude, and it is not necessary to sort, so that it is possible to improve a processing efficiency.

In accordance with the conveying apparatus of the present invention, since the apparatus is constituted by the rotary disc portion and the linear conveying portion, it is possible to stably convey without requiring a lot of space even when the linear conveying portion is arranged horizontally, and further it is possible to execute a side surface inspection of the conveyed article conveyed in the rotary disc.

It is possible to fix the supporting member to the peripheral edge of the rotary disc portion being different from the conveying belt in the linear conveying portion and it is possible to make a cross sectional area of the supporting member small, so that it is possible to stably inspect the conveyed article without working against the side surface inspection of the conveyed article and without slipping the conveyed article. In particular, when the supporting member is constituted by a structure having a buffering property and an adhesive property, for example, an O-ring, it is possible to convey at a high speed and stably.

In accordance with the described conveying apparatus, it is possible to inspect both of front and back surfaces of the conveyed article by the linear conveying portion.

It is possible to shut the air of the slit requiring no suction in the rotary disc. Accordingly, it is possible to save a suction air amount, a blower capacity can have a margin and an energy can be saved.

In accordance with the described inspecting apparatus, it is possible to inspect respective surfaces comprising the side surface and both the surfaces of the front and back surfaces of the conveyed article, and it is possible to sort in response to an inspected result in the sorting portion.

In accordance with the described aligning and supplying apparatus, it is possible to align all the small articles having the different width and thickness and stabilizing under the turned state in a low attitude, and it is not necessary to sort, so that it is possible to improve a processing efficiency.
- 1.: a conveying apparatus
- 2.: an inspecting portion
- 3.: a sorting portion
- 4.: an aligning and supplying apparatus
- 5.: a rotary disc portion
- 6.: a first conveying portion and 6a., 6b. a ring body winding the conveying belt 52
- 7.: a second conveying portion and 7a., 7b. a ring body winding the conveying belt 52
- 8.: a linear conveying portion
- 9.: .
- 10: . a turn table, and 10a. a mounting surface.
- 11.: a conveyed article
- 12.: a side surface inspecting portion
- 13.: a front surface inspecting portion
- 14.: a back surface inspecting portion
- 15.: a width guide
- 16.: .
- 17.: a slit
- 18.: a motor
- 19.: a drive shaft
- 20.: a rotary disc
- 21.: a rotary disc
- 22.: a suction duct
- 23.: a supporting member
- 24.: .
- 25.: a bearing
- 26.: a sucking hole
- 27.: a sucking hole
- 28.: a sucking connection portion
- 29.: .
- 30.: a gap
- 31.: .
- 32.: an air shutting means
- 33.: a peripheral surface portion
- 34.: a bearing
- 35.: .
- 36.: a substantially meniscus-shaped disc and 36a. a flat portion
- 37.: a semicircular protruding portion
- 38..:
- 39.: a wind guide
- 40.: a fixed plate receiving groove
- 41.: a pin
- 42.:
- 43..:
- 44.: ..
- 45.: a fixed plate
- 46.: a long hole
- 47.: a thumb screw
- 48.: a fixed member
- 49.: a vertical base
- 50.: a fixing device
- 51.:
- 52.: a conveying belt
- 53..: .
- 54.: .
- 55.: a thickness gate
- 56.: a step portion
- 57.: a projection portion.

## Claims

1. A conveying apparatus, comprising:
a rotary disc portion (5) having a slit (17) formed on its outer circumferential surface and provided with a suction means (22, 26, 27, 28) for suctioning an article (11) through the slit (17) to secure the article (11) at the opposite sides of the slit (17) while the article (11) is being conveyed, and
a linear conveying portion (8) having a pair of parallel conveying belts (52) with a gap formed therebetween and provided with a suction means for suctioning the article (11) on the pair of conveying belts (52) through the gap to secure the article (11) on the conveying belts (52), one end of the linear conveying portion (8) being opposed to the outer circumferential surface of the rotary disc portion (5) so that the article (11) is transferable from the rotary disc portion (5) to the linear conveying portion (8), wherein
the conveying apparatus further comprises ring-shaped supporting members (23) having a high friction coefficient and provided at the opposite sides of the slit (17) along the outer circumferential surface of the rotary disc portion (5).

2. The conveying apparatus according to claim 1, wherein the ring-shaped supporting members (23) are made of an article having an adhesive property and a buffering property.

3. The conveying apparatus according to claim 2, wherein the linear conveying portion (8) includes a first conveying portion (6) and a second conveying portion (7) having an identical construction, and one end of the first conveying portion (6) is opposed to the outer circumferential surface of the rotary disc portion (5) so that the article (11) is transferable, whereas one end of the second conveying portion (7) is opposed to the other end of the first conveying portion (6) so that the article (11) is transferable.

4. The conveying apparatus according to claim 3, further comprising:
an aligning and supplying apparatus (4) provided at a side of the rotary disc portion (5) opposite from the first conveying portion (6) for aligning the article (11) and supplying the article (11) to the outer circumferential surface of the rotary disc portion (5), and
an air shutting means (32) for closing the slit (17) in a circumferential surface portion of the rotary disc portion (5) except a section extending from the aligning and supplying apparatus (4) to the first conveying portion (6) with respect to a rotating direction of the rotary disc portion (5).

5. Conveying apparatus according to any of the preceding claims, comprising an aligning and supplying apparatus (4) on which an article (11) having a thickness and a width different from each other can be stably placed while a thickness or widthwise direction thereof is aligned along a longitudinal direction, comprising:
a turn table (10) having a stepped portion (56) of a specified height along a peripheral edge of a placing surface,
a width guide fixed such that the width guide crosses the stepped portion (56), and one end thereof is located at a central side of the turn table (10) while the other end thereof projects outwardly from the outer periphery of the stepped portion (56), whereby the article (11) placed on the placing surface is guided from the central side of the turn table (10) toward an outer peripheral side thereof by the rotation of the turn table (10), and
a thickness gate (55) provided above the article (11) passing through the width guide on the turn table (10), and having a projecting portion (57) projecting toward the article (11) so as to lean the article (11) in a standing position down onto the stepped portion (56) without leaning the article (11) in a lying position when the article (11) moving along the width guide moves onto the stepped portion (56) by the rotation of the turn table (10).

6. Inspecting apparatus comprising the conveying apparatus according to claim 1, 2, 3, 4 or 5, further comprising:
a side surface inspecting portion (12) for inspecting a side surface of the article (11) on the rotary disc portion (5),
a front surface inspecting portion (13) for inspecting a front surface of the article (11) on the first conveying portion (6),
a rear surface inspecting portion (14) for inspecting a rear surface of the article (11) on the second conveying portion (7), and
a sorting portion (3) for sorting the article (11) according to inspection results.

## Patentansprüche

1. Fördervorrichtung, umfassend:
einen drehbaren Scheibenabschnitt (5), der einen Schlitz (17) aufweist, der an seiner Außenumfangsoberfläche ausgebildet ist, und mit Saugmitteln (22, 26, 27, 28) versehen ist, um einen Gegenstand (11) durch den Schlitz (17) anzusaugen, um den Gegenstand (11) an den gegenüberliegenden bzw. entgegengesetzten Seiten des Schlitzes (17) zu sichern, während der Gegenstand (11) gefördert ist, und
einen linearen Förderabschnitt (8), der ein Paar von parallelen Förderbändern (52) aufweist, wobei ein Spalt dazwischen ausgebildet ist, und mit Saugmitteln zum Saugen des Gegenstands (11) auf das Paar von Förderbändern (52) durch den Spalt versehen ist, um den Gegenstand (11) an den Förderbändern (52) zu sichern, wobei ein Ende des linearen Förderabschnitts (8) der äußeren bzw. Außenumfangsoberfläche des drehbaren Scheibenabschnitts (5) so gegenüberliegt, daß der Gegenstand (11) von dem drehbaren Scheibenabschnitt (5) zu dem linearen Förderabschnitt (8) transferierbar ist, wobei
die Fördervorrichtung weiters ringförmige Abstütz- bzw. Supportglieder (23) umfaßt, die einen hohen Reibungskoeffizient aufweisen und an den gegenüberliegenden Seiten des Schlitzes (17) entlang der Außenumfangsoberfläche des drehbaren Scheibenabschnitts (5) vorgesehen sind.

2. Fördervorrichtung nach Anspruch 1, wobei die ringförmigen Supportglieder (23) aus einem Gegenstand hergestellt sind, der eine Klebeeigenschaft und eine Puffer- bzw. Ausgleichseigenschaft aufweist.

3. Fördervorrichtung nach Anspruch 2, wobei der lineare Förderabschnitt (8) einen ersten Förderabschnitt (6) und einen zweiten Förderabschnitt (7) beinhaltet, die eine identische Konstruktion aufweisen, und ein Ende des ersten Förderabschnitts (6) der Außenumfangsoberfläche des drehbaren Scheibenabschnitts (5) so gegenüberliegt, daß der Gegenstand (11) transferierbar ist, während ein Ende des zweiten Förderabschnitts (7) dem anderen Ende des ersten Förderabschnitts (6) so gegenüberliegt, daß der Gegenstand (11) transferierbar ist.

4. Fördervorrichtung nach Anspruch 3, weiters umfassend:
eine Ausricht- und Zufuhrvorrichtung (4), die an einer Seite des drehbaren Scheibenabschnitts (5) gegenüberliegend dem ersten Förderabschnitt (6) zum Ausrichten des Gegenstands (11) und Zuführen des Gegenstands (11) zu der Außenumfangsoberfläche des drehbaren Scheibenabschnitts (5) vorgesehen ist, und Luftverschlußmittel (32) zum Verschließen des Schlitzes (17) in einem Umfangsoberflächenabschnitt des drehbaren Scheibenabschnitts (5) mit der Ausnahme eines Abschnitts, der sich von der Ausricht- und Zufuhrvorrichtung (4) zu dem ersten Förderabschnitt (6) in bezug auf eine Drehrichtung des drehbaren Scheibenabschnitts (5) erstreckt.

5. Fördervorrichtung nach einem der vorhergehende Ansprüche, umfassend eine Ausricht- und Zufuhrvorrichtung (4), auf welcher ein Gegenstand (11), der eine Dicke und eine Breite verschieden voneinander aufweist, stabil angeordnet werden kann, während eine Dicken- oder Breitenrichtung davon entlang einer Längsrichtung angeordnet ist, umfassend:
einen Drehtisch (10), der einen abgestuften Abschnitt (56) einer bestimmten Höhe entlang einer Umfangskante bzw. eines Umfangsrandes einer Anordnungsoberfläche aufweist;
eine Breitenführung, die derart festgelegt ist, daß die Breitenführung den abgestuften Abschnitt (56) kreuzt und ein Ende davon an einer zentralen Seite des Drehtischs (10) angeordnet ist, während das andere Ende davon nach außen von dem Außenumfang des abgestuften Abschnitts (56) vorragt, wodurch der Gegenstand (11), der auf der Anordnungsoberfläche angeordnet ist, von der zentralen Seite des Drehtischs (10) zu einer Außenumfangsseite davon durch die Rotation des Drehtischs (10) geführt ist, und
ein Dickentor (55), das über dem Gegenstand (11) vorgesehen ist, der durch die Breitenführung auf dem Drehtisch (10) hindurchtritt, und einen vorragenden Abschnitt (57) aufweist, der zu dem Gegenstand (11) so vorragt, um den Gegenstand (11) in einer stehenden Position nach unten auf den abgestuften Abschnitt (56) zu neigen, ohne den Gegenstand (11) in einer liegenden Position zu neigen, wenn sich der Gegenstand (11), der sich entlang der Breitenführung bewegt, auf den abgestuften Abschnitt (56) durch die Rotation des Drehtischs (10) bewegt.

6. Prüf- bzw. Inspektionsvorrichtung, umfassend die Fördervorrichtung nach Anspruch 1, 2, 3, 4 oder 5, weiters umfassend:
einen Seitenoberflächen-Inspektionsabschnitt (12) zum Inspizieren bzw. Prüfen einer Seitenoberfläche des Gegenstands (11) auf dem Drehtischabschnitt (5),
einen Vorderoberflächen-Inspektionsabschnitt (13) zum Inspizieren bzw. Prüfen einer vorderen Oberfläche des Gegenstands (11) auf dem ersten Förderabschnitt (6),
einen Rückoberflächen-Inspektionsabschnitt (14) zum Inspizieren bzw. Prüfen einer rückwärtigen Oberfläche des Gegenstands (11) auf dem zweiten Förderabschnitt (7), einen Sortierabschnitt (3) zum Sortieren des Gegenstands (11) entsprechend den Prüf- bzw. Inspektionsergebnissen.

## Revendications

1. Dispositif de transport, comprenant :
une partie formant disque rotatif (5) ayant une fente (17) formée sur sa surface circonférentielle externe et munie de moyens d'aspiration (22, 26, 27, 28) pour aspirer un article (11) à travers la fente (17) afin d'assujettir l'article (11) au niveau des côtés opposés de la fente (17) pendant que l'article (11) est en train d'être transporté, et
une partie de transport linéaire (8) ayant une paire de courroies transporteuses parallèles (52) avec un écart formé entre celles-ci, et munie de moyens d'aspiration pour aspirer l'article (11) sur la paire de courroies transporteuses (52) à travers l'écart, afin d'assujettir l'article (11) sur les courroies transporteuses (52), une extrémité de la partie de transport linéaire (8) étant opposée à la surface circonférentielle externe de la partie formant disque rotatif (5) de sorte que l'article (11) puisse être transféré depuis la partie formant disque rotatif (5) vers la partie de transport linéaire (8), dans laquelle
le dispositif de transport comprend en outre des éléments de support annulaires (23) ayant un grand coefficient de frottement et positionnés sur les côtés opposés de la fente (17) le long de la surface circonférentielle externe de la partie formant disque rotatif (5).

2. Dispositif de transport selon la revendication 1, dans lequel les éléments de support annulaires (23) sont faits d'un matériau ayant une propriété adhésive et une propriété de tamponnage.

3. Dispositif de transport selon la revendication 2, dans lequel la partie de transport linéaire (8) comprend une première partie de transport (6) et une seconde partie de transport (7) ayant une construction identique, et une extrémité de la première partie de transport (6) est opposée à la surface circonférentielle externe de la partie formant disque rotatif (5) de sorte que l'article (11) puisse être transféré, tandis qu'une extrémité de la seconde partie de transport (7) est opposée à l'autre extrémité de la première partie de transport (6) de sorte que l'article (11) puisse être transféré.

4. Dispositif de transport selon la revendication 3, comprenant en outre :
un dispositif d'alignement et de distribution (4) apporté sur un côté de la partie formant disque rotatif (5) en face de la première partie de transport (6) pour aligner l'article (11) et distribuer l'article (11) vers la surface circonférentielle externe de la partie formant disque rotatif (5), et
des moyens formant volet d'air (32) pour obturer la fente (17) dans une partie de surface circonférentielle de la partie formant disque rotatif (5), à l'exception d'une section s'étendant depuis le dispositif d'alignement et de distribution (4) jusqu'à la première partie de transport (6) par rapport à un sens de rotation de la partie formant disque rotatif (5).

5. Dispositif de transport selon l'une quelconque des revendications précédentes, comprenant un dispositif d'alignement et de distribution (4) sur lequel un article (11) ayant une épaisseur et une largeur qui diffèrent l'une de l'autre, puisse être positionné tandis qu'un sens de l'épaisseur ou de la largeur de celui-ci est aligné sur une direction longitudinale, comprenant :
une plaque tournante (10) ayant une partie formant gradin (56) d'une hauteur spécifique le long d'un bord périphérique d'une surface de positionnement,
un guide de largeur fixé de sorte que le guide de largeur traverse la partie formant gradin (56), et dont une extrémité est positionnée au niveau d'un côté central de la plaque tournante (10) tandis que l'autre extrémité de celui-ci fait saillie vers l'extérieur de la périphérie externe de la partie formant gradin (56), tandis que l'article (11) placé sur la surface de positionnement est guidé depuis le côté central de la plaque tournante (10) vers un côté périphérique externe de celle-ci par la rotation de la plaque tournante (10), et
une barrière d'épaisseur (55) apportée au-dessus de l'article (11) en train de passer à travers le guide de largeur sur la plaque tournante (10), et ayant une partie en saillie (57) faisant saillie vers l'article (11) de manière à faire pencher l'article (11), dans une position verticale, sur la partie formant gradin (56) sans faire pencher l'article (11) dans une position couchée lorsque l'article (11) se déplaçant le long du guide de largeur se déplace sur la partie formant gradin (56) par la rotation de la plaque tournante (10).

6. Dispositif d'inspection comprenant le dispositif de transport selon la revendication 1, 2, 3, 4 ou 5, comprenant en outre :
une partie d'inspection de surface latérale (12) pour inspecter une surface latérale de l'article (11) sur la partie formant disque rotatif (5),
une partie d'inspection de surface avant (13) pour inspecter une surface avant de l'article (11) sur la première partie de transport (6),
une partie d'inspection de surface arrière (14) pour inspecter une surface arrière de l'article (11) sur la seconde partie de transport (7), et
une partie de triage (3) pour trier l'article (11) selon les résultats de l'inspection.
